# EUROPÄISCHE PATENTANMELDUNG

(11) **EP 1 821 119 A2**
(43) Veröffentlichungstag der Anmeldung: **22.08.2007**
(21) Anmeldenummer: 07003162.0
(22) Anmeldetag: 14.02.2007
(51) Int. Cl.: G01V 1/16

(54) **Verankerungseinrichtung und Sensoreinrichtung für ein seismisches Messgerät**

(30) Priorität: 17.02.2006 DE 102006007474
(71) Anmelder: GeoForschungsZentrum Potsdam, 14473 Postdam (DE)
(72) Erfinder: Borm, Günter, 76227 Karlsruhe (DE); Maushake, Bernd, 14542 Werder (Have) (DE); Giese, Rüdiger, 14715 Schmetzdorf (DE); Paul, Roland, 14823 Klein-Marzehns (DE); Otto, Peter, 14471 Potsdam (DE)
(74) Vertreter: Hertz, Oliver

(57) **Zusammenfassung**

Eine Verankerungseinrichtung (10) für eine Sensoreinrichtung (20) zur Erfassung von seismischen Signalen umfasst ein Verankerungsrohr (11) mit einer Aufnahme (12) für die Sensoreinrichtung (20) und einer Kopplungseinrichtung (13) zur Verbindung der Sensoreinrichtung (20) mit dem Verankerungsrohr (11) aufweist, wobei die Kopplungseinrichtung (13) einen Rohr-Gewindebereich (14) umfasst, der sich in der Aufnahme (12) im Verankerungsrohr (11) erstreckt. Die Sensoreinrichtung (20) weist insbesondere auf einer Außenseite eines Gehäuses (22) einen Sensor-Gewindebereich (25) zur Verbindung der Sensoreinrichtung (20) mit der Verankerungseinrichtung (10) vorgesehen ist. Es wird auch ein seismisches Messgerät (30) mit der Verankerungseinrichtung (10) und der Sensoreinrichtung (20) beschrieben.

## Beschreibung

Die Erfindung betrifft eine Verankerungseinrichtung mit den Merkmalen des Oberbegriffs von Anspruch 1, die zur Positionierung einer seismischen Sensoreinrichtung vorgesehen ist. Die Erfindung betrifft des weiteren eine Sensoreinrichtung zur Erfassung von seismischen Signalen mit den Merkmalen des Oberbegriffs von Anspruch 10 und ein seismisches Messgerät, das eine Verankerungs- und eine Sensoreinrichtung aufweist.

Es ist allgemein bekannt, im Bergbau, Felsbau, Grundbau oder Massivbau künstliche oder natürliche Schwingungen mit seismischen Sensoren zu erfassen. Ein seismischer Sensor enthält mindestens ein Geofon oder mindestens ein Akzelerometer. Für richtungsselektive Schwingungsmessungen sind mehrere Geofone oder Akzelerometer, z. B. drei Geofone, vorgesehen, deren Messrichtungen jeweils zueinander einen Winkel von 90° bilden.

Um geologische Strukturen oder Bauwerke zu erkunden, werden Geofone mit einem festen Dorn zur Ankoppelung an den Untergrund in die Oberfläche der untersuchten Struktur, z. B. Erdboden oder Festgestein, eingesteckt oder mit einem Flansch, z. B. an einen Felsen, angedübelt. Entsprechend können auch Akzelerometer mit geringer Eigenmasse an den Untergrund lösbar angekittet oder geklebt werden. Die Schwingungsmessung an der Oberfläche der untersuchten Struktur ist jedoch nachteilig, da das gewünschte Nutzsignal, das z. B. durch Volumenschwingungen aus der Erdkruste gebildet wird, mit störenden Oberflächenwellen überlagert ist. Dieses Problem kann vermindert werden, wenn die seismischen Sensoren in einer Bohrung im Volumen der untersuchten geologischen Struktur oder des untersuchten Bauwerks positioniert werden.

In DE 198 52 455 A1 wird ein Felsanker insbesondere für den Tunnelbau beschrieben, in dessen Ankerstab ein seismischer Sensor mit mehreren Geofonen oder Akzelerometern integriert ist. Vorteilhafterweise können mit dieser Technik Bohrungen zur Aufnahme des Felsankers beim Wandausbau zugleich zur Messung seismischer Schwingungen verwendet werden. Ein Nachteil kann jedoch darin bestehen, dass die Sensoren mit dem Ankerstab fest verbunden sind und daher nach dem Wandausbau nicht wiederverwendet werden können.

Aus CH 689 191 A5 ist ein seismisches Messgerät bekannt, bei dem mehrere seismische Sensoren in einem Rohr angeordnet sind, welches zur Aufnahme von seismischen Schwingungen in eine Bohrung einführbar ist. Dieses Messgerät ist insbesondere für unterirdische seismische Messungen außerhalb der aufgelockerten Randzone einer Tunnel- oder Stollenwand vorgesehen. Das Rohr weist ein rechteckiges Profil auf, in dem ein oder mehrere Akzelerometer lösbar unter der Wirkung einer Federvorspannung oder eines Magneten befestigt sind. Mit dieser Technik können die Sensoren zwar vorteilhafterweise nach der Messung wiederverwendet werden. Nachteile können sich jedoch in Bezug auf die Empfindlichkeit und die mechanische Ankopplung der Sensoren an die Umgebung ergeben. Des weiteren erzeugt das rechteckige Rohrprofil in den Bohrungen mit einem typischerweise kreisförmigen Bohrprofil relativ große Totvolumen, die mit großem Aufwand mit Zement gefüllt werden müssen.

In EP 753 161 B1 wird ein geologisches Bohrgerät beschrieben, in dessen Gestänge ein akustischer Sensor einsetzbar ist. Der akustische Sensor ist mit dem Gestänge lösbar verbunden und dazu vorgesehen, in Betriebspausen des Bohrgerätes seismische Schwingungen aus der Umgebung aufzunehmen. Die in EP 753 161 B1 beschriebene Technik ist lediglich für Kontrollmessungen bei Verwendung des Bohrgerätes vorgesehen. Die Ankopplung des akustischen Sensors an das Bohrgestänge erfordert einen komplizierten mechanischen Aufbau, der sich nachteilig auf eine Übertragung der Schwingungen von der Umgebung auf den Sensor auswirkt. Die herkömmliche Technik zeichnet sich daher durch eine geringe Empfindlichkeit und uneffektive mechanische Ankopplung der Sensoren an die Umgebung aus. Ein weiterer Nachteil besteht darin, dass das Bohrgestänge keine sichere Verankerung des akustischen Sensors in der umgebenden geologischen Formation darstellt. Die Aufnahme der seismischen Schwingungen hängt von dem zufälligen Betriebszustand ab, den das Bohrgerät in der Betriebspause einnimmt. Ein wesentlicher Nachteil des herkömmlichen Verfahrens besteht schließlich auch darin, dass die Position des Sensors nicht exakt definiert ist und dass die Übertragung von Messsignalen erhebliche praktische Schwierigkeiten bereitet.

Die Aufgabe der Erfindung ist es, eine verbesserte Verankerungseinrichtung bereitzustellen, mit der die Nachteile der herkömmlichen Techniken zur Positionierung einer seismischen Sensoreinrichtung vermieden werden und die insbesondere eine zuverlässige und dennoch lösbare Verankerung der Sensoreinrichtung mit einer verbesserten Schwingungsankopplung an die Umgebung ermöglicht. Die Verankerungseinrichtung soll sich insbesondere durch einen vereinfachten Aufbau und eine leichte Handhabung beim Einsetzen der Sensoreinrichtung auszeichnen. Die Aufgabe der Erfindung ist es auch, eine verbesserte Sensoreinrichtung zur Erfassung von seismischen Signalen bereitzustellen, mit der die Nachteile der herkömmlichen Techniken überwunden werden und die insbesondere für eine zuverlässige Kraftübertragung lösbar mit der Verankerungseinrichtung verbunden werden kann. Die Sensoreinrichtung soll einen kostengünstigen Aufbau aufweisen und bei Bedarf mit geringem Aufwand von der Verankerungseinrichtung trennbar sein. Die Aufgabe der Erfindung ist es auch, ein verbessertes seismisches Messgerät bereitzustellen, mit dem die Nachteile der herkömmlichen Techniken vermieden werden und bei dem in allen Messpositionen und unter allen Messbedingungen die erforderliche feste Verbindung von Sensoren mit der Umgebung, z.B. dem umgebenden Gestein, garantiert wird. Das Messgerät soll sich insbesondere durch eine verbesserte lösbare Verbindung der Verankerungseinrichtung und der Sensoreinrichtung auszeichnen, mit der die Qualität der Ankopplung, die Sicherheit der Positionierung von Sensoren und die Reproduzierbarkeit von Messwerten unbeeinträchtigt sind.

Diese Aufgaben werden mit einer Verankerungseinrichtung, einer Sensoreinrichtung, einem seismischen Messgerät und einem Messverfahren mit den Merkmalen der unabhängigen Patentansprüche gelöst. Vorteilhafte Ausführungsformen und Anwendungen der Erfindung ergeben sich aus den abhängigen Ansprüchen.

Gemäß einem ersten Gesichtspunkt basiert die Erfindung auf der allgemeinen technischen Lehre, zur lösbaren Fixierung einer Sensoreinrichtung eine Verankerungseinrichtung mit einem Verankerungsrohr bereitzustellen, das eine Kopplungseinrichtung zur Herstellung einer Schraubverbindung der Sensoreinrichtung mit dem Verankerungsrohr aufweist. In der Aufnahme des Verankerungsrohres ist ein Gewindebereich (so genannter Rohr-Gewindebereich) vorgesehen, an dem die Sensoreinrichtung in das Verankerungsrohr einschraubbar ist.

Vorteilhafterweise wird mit der Verankerungseinrichtung eine form- und/oder kraftschlüssige Verbindung der Sensoreinrichtung mit dem Verankerungsrohr mit einem im Vergleich zu den herkömmlichen Verbindungstechniken (Federelement, Magnetkopplung) erheblich vereinfachten Aufbau ermöglicht. In dem Verankerungsrohr ist ein einziges Innengewinde ausreichend, um eine Sensoreinrichtung, die gegebenenfalls mehrere Sensoren umfasst, zuverlässig zu fixieren und eindeutig reproduzierbar zu positionieren. Die Erfinder haben festgestellt, dass mit der Schraubverbindung ein zuverlässiger Form- und/oder Kraftschluss realisiert werden kann, der überraschenderweise nicht nur in axialer Richtung der Schraubverbindung, sondern auch in davon abweichenden, radialen Richtungen gegeben ist. Die Schraubverbindung genügt den hohen Anforderungen bei der Weiterleitung von mechanischen Schwingungssignalen aus der Umgebung zu einer in der Verankerungseinrichtung angeordneten Sensoreinrichtung.

Mit der Schraubverbindung zwischen der Verankerungseinrichtung und der Sensoreinrichtung wird insbesondere ein Formschluss gebildet. Mit dem Formschluss kann auf die bei herkömmlichen Techniken vorgesehenen kraftschlüssigen Verbindungen durch Federvorspannung oder Magnetkraft verzichtet werden, ohne Beeinträchtigungen bei der Kraftübertragung in Kauf nehmen zu müssen. Daher wird die Schraubverbindung hier auch als kraftschlüssig bezeichnet. Bei den herkömmlichen Verbindungen stehen die Bewegungskraft und die Vorspannkraft im Winkel von 90° zueinander. Im Fall der Schraubverbindung hingegen wirken Keilkräfte (Schraube), wobei die gewählte Form des Keils dominiert (Reibwinkel > Keilwinkel).

Die Schraubverbindung wird vorzugsweise mit einem Rundgewinde gebildet, das sich vorteilhafterweise durch geringe Positionierfehler und eine hohe Unempfindlichkeit gegen Schmutz auszeichnet.

Die Verankerungseinrichtung ist dazu eingerichtet, in einer geologischen Struktur, insbesondere im Bergbau, Felsbau oder Tunnelbau, oder einem Bauwerk, insbesondere im Grundbau oder Massivbau ortsfest fixiert zu werden. Die Verankerungseinrichtung ist dazu vorgesehen, nach Einbringung und Befestigung in der geologischen Struktur oder dem Bauwerk dort dauerhaft zu verbleiben.

Gemäß einem weiteren, unabhängigen Gesichtspunkt der Erfindung wird die genannte Aufgabe mit einer Sensoreinrichtung zur Erfassung von seismischen Signalen gelöst, die an einem stabförmigen Trägerteil ein Sensorteil mit einem Gehäuse aufweist, das einen Gewindebereich (sogenannter Sensor-Gewindebereich) zur Herstellung einer Schraubverbindung mit einer rohrförmigen Verankerungseinrichtung aufweist. Das Sensorteil umfasst mindestens einen seismischen Sensor. Alle zu dem Sensorteil gehörenden seismischen Sensoren sind mit dem Gehäuse des Sensorteils stoffschlüssig verbunden. Das Gehäuse des Sensorteils umfasst ein Sensorgehäuse eines einzelnen seismischen Sensors oder ein zusätzliches Aufnahmegehäuse, in dem mehrere, z.B. drei seismische Sensoren stoffschlüssig angeordnet, z.B. eingeklebt, sind. Das Gehäuse weist als Sensor-Gewindebereich ein Außengewinde auf, mit dem die Sensoreinrichtung form- und/oder kraftschlüssig in eine innere Aufnahme eines Rohres, welches die Verankerungseinrichtung bildet, eingeschraubt werden kann. Die Sensoreinrichtung ist dazu eingerichtet, in die Verankerungseinrichtung gemäß dem oben genannten ersten Gesichtspunkt der Erfindung eingesetzt zu werden. Das Sensorteil ist über die Schraubverbindung direkt mit dem Verankerungsrohr verbunden, das zur dauerhaften Fixierung in der geologischen Struktur oder dem Bauwerk eingerichtet ist.

Die erfindungsgemäße Sensoreinrichtung für die Erfassung von seismischen Signalen in einer untersuchten Struktur, wie z.B. Felsgestein oder einem Bauwerk, hat vorteilhafterweise einen erheblich vereinfachten Aufbau, bei dem insbesondere auf Komponenten zur Wechselwirkung mit der bei einer herkömmlichen Verankerungseinrichtung vorgesehenen Kopplungseinrichtung, wie z.B. auf Auflagen für Federelemente oder auf magnetische Materialien verzichtet werden kann. Die erfindungsgemäße Sensoreinrichtung kann mit geringem Aufwand mit herkömmlichen Sensoren, wie z.B. Geofonen und/oder Akzelerometern, aufgebaut werden. Die Sensoreinrichtung zeichnet sich durch eine vereinfachte Handhabung beim Einsetzen in eine Verankerungseinrichtung insbesondere unter Verwendung des Trägerteils zum Einschrauben des Sensorteils in die Verankerungseinrichtung und bei der Entnahme der Sensoreinrichtung für eine Wiederverwendung aus.

Gemäß einem dritten Gesichtspunkt der Erfindung wird die genannte Aufgabe durch ein seismisches Messgerät gelöst, das die erfindungsgemäße Verankerungseinrichtung und die erfindungsgemäße Sensoreinrichtung umfasst. Es wird ein zweiteiliger Aufbau mit dem Verankerungsrohr der Verankerungseinrichtung als rohrförmigem Mantelteil und der Sensoreinrichtung als Innenteil geschaffen. Eine Messanordnung, z. B. im Tunnelbau kann in der Praxis mehrere Verankerungs- und Sensoreinrichtungen umfassen.

Gemäß einem vierten Gesichtspunkt der Erfindung wird die genannte Aufgabe durch ein seismisches Messverfahren gelöst, bei dem mit dem seismischen Messgerät seismische Schwingungen in einer geologischen Struktur oder einem Bauwerk erfasst werden. In einem ersten Schritt wird die erfindungsgemäße Verankerungseinrichtung in die geologische Struktur oder das Bauwerk eingebracht und dort dauerhaft fixiert. Die Fixierung erfolgt bspw. durch Einkleben oder Einzementieren. Bei der Einbringung der Verankerungseinrichtung kann die Sensoreinrichtung in die Verankerungseinrichtung eingesetzt sein. Alternativ kann die Verankerungseinrichtung ohne die Sensoreinrichtung in die geologische Struktur oder das Bauwerk eingebracht werden. Im letzteren Fall wird in einem zweiten Schritt die erfindungsgemäße Sensoreinrichtung in die Verankerungseinrichtung eingesetzt. Die Sensoreinrichtung wird in die Verankerungseinrichtung eingeschraubt, wobei das Sensorteil form- und/oder kraftschlüssig mit der Verankerungseinrichtung gekoppelt wird. In einem weiteren Schritt erfolgt die Erfassung seismischer Schwingungen, wie es von herkömmlichen Messverfahren, z. B. von der Anwendung der in DE 198 52 455 A1 beschriebenen Sensoren bekannt ist.

Vorzugsweise ist die Aufnahme mit dem Rohr-Gewindebereich dort angeordnet, wo die Position der Sensoren gewünscht ist, sich dann eine optimale Sensorankopplung ergibt. Gemäß einer bevorzugten Ausführungsform der erfindungsgemäßen Verankerungseinrichtung ist die Aufnahme mit dem Rohr-Gewindebereich an einem Rohrende des Verankerungsrohres angeordnet. Vorteilhafterweise kann damit die Sensoreinrichtung in maximaler Tiefe unterhalb der Oberfläche der untersuchten Struktur verankert werden, so dass aufgelockerte Oberflächenbereiche, wie sie z. B. durch einen Sprengvortrieb entstehen und die zu Fehlinterpretationen führen können, vermieden werden können. Des Weiteren kann falls erforderlich der bei manchen Messaufgaben unerwünschte Einfluss von Oberflächenwellen minimiert werden. Das Rohrende des Verankerungsrohres ist vorzugsweise geschlossen, um die Aufnahme mit der Sensoreinrichtung in dem Rohrende des Verankerungsrohres von unerwünschten Materialien aus der Umgebung der Verankerungseinrichtung frei zu halten. Bei dieser Ausführungsform der Erfindung umfasst die Verankerungseinrichtung ein einseitig geschlossenes Verankerungsrohr, in dem an das geschlossene Rohrende angrenzend die Aufnahme mit dem Rohr-Gewindebereich in Form eines Innengewindes, vorzugsweise eines Rundgewindes, vorgesehen ist. Das Sensorteil, insbesondere das Gehäuse mit dem Außengewinde, setzt beim Einschrauben mit seiner Stirnseite auf das geschlossene Ende des Rohres auf. Vorteilhafterweise wird damit eine Verspannung im Gewinde erreicht, die den Formschluss zwischen der Stirnseite und den Gewindeflanken von Gehäuse und Sensorteil garantiert und damit eine Wirkung entsprechend einem Kraftschluss zwischen dem Sensorteil und der Umgebung erhöht.

Gemäß einer weiteren Variante der Erfindung weist das Rohrende eine Spitze auf. Es ist ein Spitzenelement vorgesehen, das durch eine sich verjüngende Form des Verankerungsrohres am Rohrende oder ein am Rohrende angebrachtes, z.B. kegel- oder pyramidenförmiges Bauteil gebildet wird. Erfindungsgemäß kann das Spitzenelement schiefwinkelig gebildet sein. In diesem Fall befindet sich die Spitze des Spitzenelements außerhalb der Achse des Verankerungsrohres. Mit dem schiefwinkeligen Spitzenelement können sich Vorteile bei der Einführung der Verankerungseinrichtung in ein Bohrloch, z.B. in Felsgestein, und bei der Durchmischung eines im Bohrloch angeordneten Bindemittels ergeben. Alternativ oder zusätzlich kann ein am Rohrende vorgesehenes Bauteil scharfkantig, z. B. mit einer Schneide gebildet sein, wodurch vorteilhafterweise ein Öffnen einer Klebstoffkartusche, z. B. durch Zerschneiden vereinfacht wird.

Ein weiterer Vorteil der Erfindung ist es, dass allgemein keine Beschränkungen in Bezug die Querschnittsform des Verankerungsrohres bestehen. Es kann beispielsweise ein eckiger, insbesondere rechteckiger Querschnitt vorgesehen sein. Bevorzugt ist jedoch ein kreisförmiger Querschnitt, der vorteilhafterweise ein zylindrisches Bohrloch optimal ausfüllt. Gemäß einer besonders bevorzugten Ausführungsform der erfindungsgemäßen Verankerungseinrichtung hat das Verankerungsrohr somit die Form eines geraden Kreiszylinders, von dem ein Rohrende vorzugsweise mit dem Spitzenelement verschlossen ist. An dem Rohrende mit dem Spitzenelement ist die Aufnahme für die Sensoreinrichtung vorgesehen. Vorzugsweise weist das Verankerungsrohr an dem zum Spitzenelement entgegengesetzten Ende ein Eingriffselement zum Ansetzen eines Werkzeuges und/oder ein Außengewinde zum Ansetzen einer Ankermutter auf. Mit dem Eingriffselement wird eine Drehung der Verankerungseinrichtung im Bohrloch ermöglicht, z. B. um die Einführung der Verankerungseinrichtung in das Bohrloch zu erleichtern oder um ein Bindemittel im Bohrloch zu durchmischen. Mit dem Außengewinde zur Aufnahme einer Ankermutter erhält die Verankerungseinrichtung vorteilhafterweise eine Doppelfunktion einerseits zur lösbaren Positionierung der Sensoreinrichtung und andererseits als Wandanker, der in an sich bekannter Weise zur Stabilisierung einer Struktur, wie z.B. einer unterirdischen Tunnelwand oder eines Bauwerks vorgesehen ist.

Wenn der Rohr-Gewindebereich im Verankerungsrohr gemäß einer bevorzugten Gestaltung der Erfindung ein gefrästes Innengewinde, insbesondere Innenrundgewinde aufweist, so ergeben sich Vorteile für die zuverlässige kraftschlüssige Kopplung der Sensoreinrichtung mit einer optimierten Schwingungsleitung in allen drei Raumrichtungen.

Bei einer weiteren bevorzugten Ausführungsform der erfindungsgemäßen Sensoreinrichtung ist das Sensorteil mit dem mindestens einen seismischen Sensor an einem Ende des stabförmigen Trägerteils angeordnet. Entsprechend kann das Sensorteil mit dem Trägerteil vorteilhafterweise bis in eine Aufnahme am Rohrende einer erfindungsgemäßen Verankerungseinrichtung eingeführt werden.

Wenn das Sensorteil mit dem Trägerteil lösbar verbunden ist, ergeben sich Vorteile für die Anpassung der Sensoreinrichtung an Verankerungseinrichtungen mit verschiedenen axialen Längen und für die Wiederverwendbarkeit des Trägerteils zum Einsetzen von Sensorteilen in verschiedene Verankerungseinrichtungen.

Wenn in das Trägerteil der erfindungsgemäßen Sensoreinrichtung elektrische Verbindungsleitungen des Sensorteils integriert sind, ergibt sich vorteilhafterweise eine besonders kompakte Bauform der Sensoreinrichtung. Das Trägerteil besteht vorzugsweise aus einem Faserverbundmaterial, z. B. glasfaserverstärktes Epoxidharz, in das die elektrischen Verbindungsleitungen eingebettet sind.

Ein wichtiger Vorteil der erfindungsgemäßen Sensoreinrichtung besteht in deren erweiterten Anwendungsbereich. Das Sensorteil kann in Abhängigkeit von der konkreten Aufgabenstellung einen oder mehrere Sensoren enthalten. Besonders bevorzugt sind seismische Sensoren vorgesehen, die im Sensorteil so angeordnet sind, dass ihre Hauptempfindlichkeitsrichtungen senkrecht aufeinander stehen.

Das erfindungsgemäße seismische Messgerät und seine Komponenten Verankerungseinrichtung und Sensoreinrichtung besitzen die folgenden weiteren Vorteile. Die erforderliche feste Verbindung der Sensoren der Sensoreinrichtung mit der Umgebung, z.B. dem umgebenden Gestein, sind für alle Messpositionen und Messbedingungen garantiert. Durch die lösbare Verbindung der Sensoreinrichtung mit der Verankerungseinrichtung werden der Verbrauch von Sensoren und die damit verbundenen Kosten erheblich verringert. Die Qualität der Ankoppelung der Sensoren, die Positioniersicherheit, die Handhabung und die Reproduzierbarkeit der Messwerte sind mit der erfindungsgemäßen Technik gleichermaßen wie bei einem seismischen Messgerät mit einem festen Verbund aus Verankerungseinrichtung und Sensoreinrichtung gegeben, wie es beispielsweise in DE 198 52 455 beschrieben ist.

Weitere Einzelheiten und Vorteile der Erfindung werden im Folgenden unter Bezugnahme auf die beigefügten Zeichnungen beschrieben. Es zeigen:
- Figur 1: eine schematische Illustration der Positionierung einer erfindungsgemäßen Verankerungseinrichtung mit einer erfindungsgemäßen Sensoreinrichtung in einer Tunnelwand;
- Figur 2: einen vergrößerten Ausschnitt der Verankerungs- und Sensoreinrichtungen gemäß Figur 1 in teilweiser Schnittansicht;
- Figur 3: eine schematische, teilweise geschnittene Ansicht einer erfindungsgemäßen Sensoreinrichtung;
- Figur 4: weitere Einzelheiten der erfindungsgemäßen Koppelung der Sensoreinrichtung mit der Verankerungseinrichtung; und
- Figuren 5 und 6: weitere Illustrationen der Einbringung und Positionierung der erfindungsgemäßen Sensorik in einem Bohrloch.

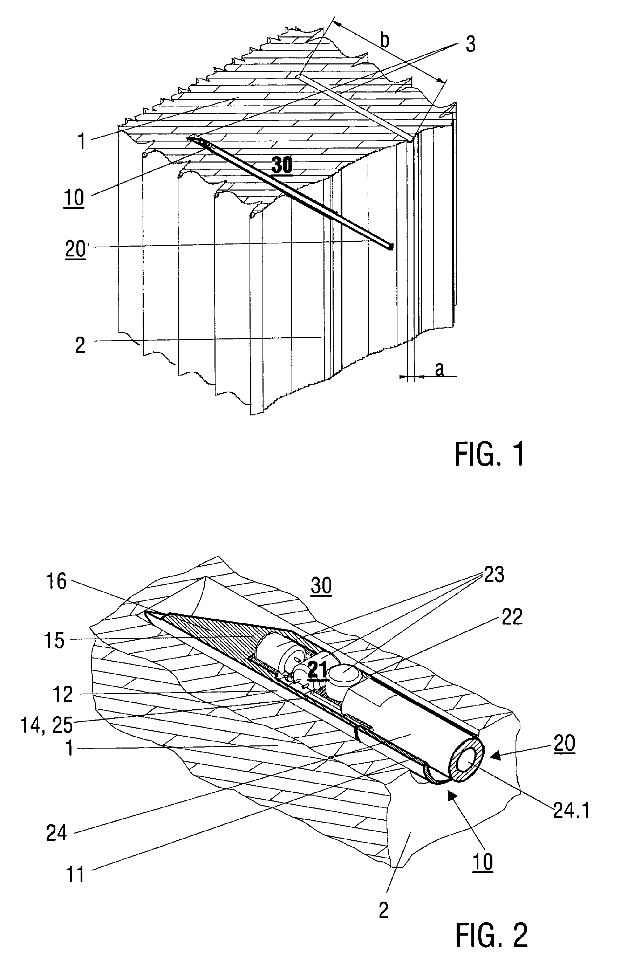

Figur 1 illustriert einen Ausschnitt eines Tunnels durch Felsgestein 1, in das von einer Tunnelwand 2 ausgehend Bohrlöcher 3 gebohrt sind. In einem der Bohrlöcher 3 ist ein erfindungsgemäßes seismisches Messgerät 30 (sog. seismischer Sensorstab) mit der Verankerungseinrichtung 10 (teilweise dargestellt) und der Sensoreinrichtung 20 gezeigt, deren Einzelheiten unten beschrieben sind. Die Verankerungseinrichtung 10 ist durch ein Bindemittel mit dem umgebenden Felsgestein 1 fest verbunden. Als Bindemittel wird z. B. ein Zweikomponenten-Epoxidharzkleber 4 verwendet.

Der Durchmesser a der Bohrlöcher 2 ist in Abhängigkeit vom maximalen Außendurchmesser und der Länge der Verankerungseinrichtung 10, der verwendeten Bohrtechnologie, dem Gesteinsmaterial und dessen Druckhaftigkeit gewählt. Typischerweise ist der Durchmesser a rd. 10 mm größer als der maximale Durchmesser der Verankerungseinrichtung 10, um eine gute Durchmischung des Bindemittels im Bohrloch zu gewährleisten und gleichzeitig den Bindemittelverbrauch zu begrenzen. Die Länge b der Bohrlöcher 3 ist in Abhängigkeit von der Länge der Verankerungseinrichtung 10 gewählt, die an die Zusammensetzung des Auflockerungsbereiches der Tunnelwand 2 und die bevorzugt zu messende Wellenart angepasst ist. Die Länge der Verankerungseinrichtung 10 liegt vorzugsweise im Bereich von 0.2 m bis 4 m. Der Durchmesser der Verankerungseinrichtung 10 wird in Abhängigkeit von der Größe und Anzahl der verwendeten Sensorik gewählt und liegt vorzugsweise im Bereich von 3 cm bis 4 cm.

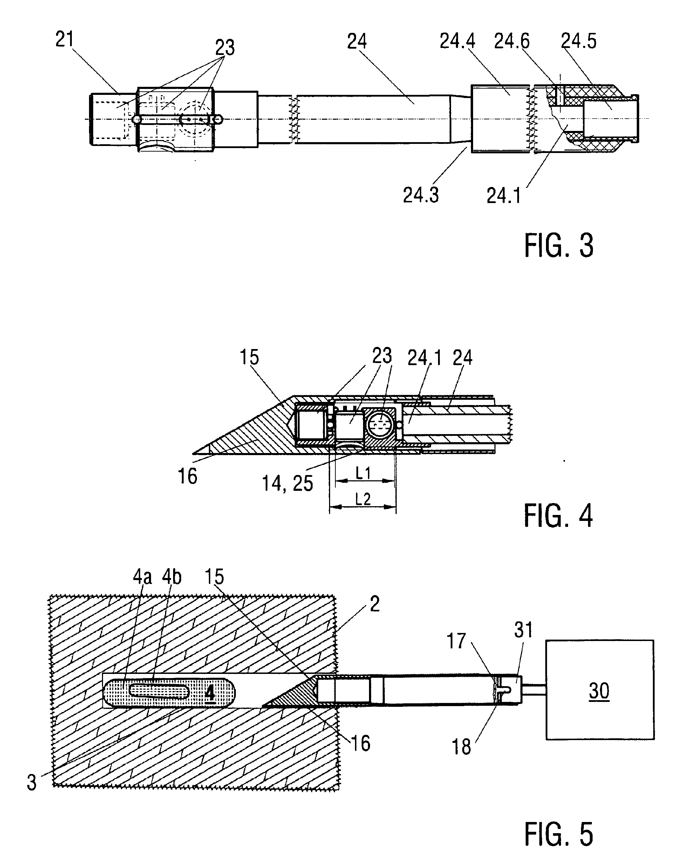

Gemäß Figur 2 umfasst die Verankerungseinrichtung 10 als rohrförmiges Mantelteil das Verankerungsrohr 11, an dessen Rohrende 15 das schiefwinkelige Spitzenelement 16 vorgesehen ist. Das Verankerungsrohr 11 und das Spitzenelement 16 sind verdrehsicher miteinander verbunden. Im Inneren des Verankerungsrohrs 11 befindet sich am Rohrende 15 die Aufnahme 12 für die Sensoreinrichtung 20. Auf der Innenwand des Verankerungsrohrs 11 ist zumindest im Bereich der Aufnahme 12 als Rohr-Gewindebereich ein gefrästes Innengewinde 14 (siehe Figur 4) zur form- und/oder kraftschlüssigen Ankoppelung der Sensoreinrichtung 10 vorgesehen.

Die Sensoreinrichtung 20 umfasst das Sensorteil 21 mit drei seismischen Sensoren 23 (z. B. Geofone oder Akzelerometer), die in einem Gehäuse 22 angeordnet sind. Die Gefone sind mit rechtwinkelig aufeinander stehenden Messachsen mittels Zweikomponenten-Epoxidharzkleber fest in das Gehäuse 22 eingeklebt. Auf der Außenseite des Gehäuses 22 ist ein Außengewinde 25 zur form- und/oder kraftschlüssigen Verbindung der Sensoreinrichtung 20 mit der Verankerungseinrichtung 10 vorgesehen.

Das Sensorteil 21 ist mit dem stabförmigen Trägerteil 24 fest verbunden. Das Trägerteil 24 besteht aus glasfaserverstärktem Kunststoff. Es enthält einen zentralen Kanal 24.1, durch den Verbindungsleitungen von den Sensoren 23 an das aus der Wand 2 des Felsgesteins 1 ragenden Ende der Sensoreinrichtung 20 verlaufen.

Figur 3 illustriert weitere Einzelheiten der erfindungsgemä-ßen Sensoreinrichtung 20 mit dem Sensorteil 21 und dem Trägerteil 24, von dem die Bereiche nahe den Enden 24.2, 24.3 gezeigt sind. Das Sensorteil 21 ist an dem ersten Ende 24.2 des Trägerteils 24 befestigt. Am entgegengesetzten, zweiten Ende 24.3 ist eine Schraubaufnahme 24.4 vorgesehen, die sich axial zum Trägerteil 24 erstreckt. In die Schraubaufnahme 24.4 ist ein Stecker 24.5 mit Epoxidharz eingeklebt. Die elektrischen Verbindungsleitungen verlaufen von den Sensoren 23 durch den Kanal 24.1 im Trägerteil 24 bis zum Stecker 24.5. Des weiteren ist an der Schraubaufnahme 24.4 eine Kontrollmarkierung 24.6 vorgesehen. Die Kontrollmarkierung 24.6 dient der Überprüfung der Orientierung der Sensoren 23, wenn die Sensoreinrichtung 20 in die Verankerungseinrichtung 10 eingeführt ist. Vorteilhafterweise wird beim Einkleben der Verankerungseinrichtung 10 die spätere Position der Sensoren festgelegt.

Figur 4 illustriert die Kopplung der Sensoreinrichtung 20 mit der Verankerungseinrichtung 10 durch die Verbindung des Innengewindes 12 der Aufnahme 12 mit dem Außengewinde 25 auf dem Gehäuse 22. Die Sensoren 23 sind mit zueinander senkrechten Messachsen axial aufeinanderfolgend im Gehäuse 22 angeordnet. Die Messachse des vordersten Sensors (axialer Sensor) verläuft parallel zur Achsenrichtung des Verankerungsrohrs 11. Die Messachsen der übrigen Sensoren (radiale Sensoren) verlaufen senkrecht zur Achsenrichtung des Verankerungsrohrs 11.

Die Innen- und Außengewinde 14, 25 erstrecken sich vorzugsweise über den Bereich der radial angekoppelten Sensoren, um deren Schwingungskopplung mit der Umgebung und Signalübertragung zu verbessern. Des weiteren wird bei der Kopplung des Sensorteils 20 mit der Aufnahme 12 eine Vorspannkraft auf das axial angekoppelte Geofon erzeugt. Hierzu ist die Länge L2 des Innengewindes 14 der Verankerungseinrichtung 10 größer als die Länge L1 des Außengewindes 25 am Gehäuse 22. Beim Anliegen des Gehäuses 22 oder der Frontseite des axial angekoppelten Sensors am Rohrende 15 ist vorzugsweise rund ein Gewindegang oder 1 mm zusätzliches Gewinde am Innengewinde 25 vorhanden. Damit wird die Vorspannung des Gehäuses oder des Sensors im Gewinde und der Kraftschluss zum Verankerungsrohr erhöht.

Figur 5 illustriert, wie die Verankerungseinrichtung 10 in das Bohrloch 3 eingesetzt wird. Zunächst wird in das Bohrloch 3 ein Epoxidharzkleber 4 mit den Einzelkomponenten 4a, 4b eingeführt. In diesem Zustand sind die Einzelkomponenten 4a, 4b zur Vermeidung eines vorzeitigen Aushärtens vorzugsweise voneinander getrennt. Die Verankerungseinrichtung 10 wird mit dem geschlossenen Rohrende 15 in das Bohrloch 3 geschoben. Hierzu kann ein am entgegengesetzten, offenen Rohrende angesetztes Drehwerkzeug 30 verwendet werden, das mit einem Eingriffselement 17 am offenen Ende zusammenwirkt. Mit einem formschlüssigen Mitnehmer 31 des Drehwerkzeugs 30 wird die Verankerungseinrichtung 10 beim Vorschieben in dem Bohrloch 3 in Rotation versetzt. Bei Erreichen des Epoxidharzklebers werden die Einzelkomponenten 4a, 4b durch die Drehung des Spitzenelements 16 vermischt, so dass das Aushärten des Epoxidharzklebers beginnt.

Die Verankerungseinrichtung 10 wird vorwärtsgeschoben oder gedreht, bis das Verankerungsrohr 11 vollständig im Bohrloch 3 angeordnet ist. Am offenen Ende des Verankerungsrohres 11 befindet sich eine Positionsmarkierung 18, mit dem die Ausrichtung der Verankerungseinrichtung 10 im Bohrloch 3 und insbesondere die Ausrichtung des Innengewindes 14 beobachtet werden kann. Alternativ kann, insbesondere bei Verwendung der Verankerungseinrichtung 10 als Wandanker das offene Ende von der Tunnelwand 2 vorstehen, um an einem Außengewinde (nicht dargestellt) eine Ankermutter anzusetzen. Wenn die Verankerungseinrichtung die gewünschte Ausrichtung im Bohrloch 3 erhalten hat, werden der Vorschub und die Drehung beendet, wobei das Bindemittel 4 aushärtet.

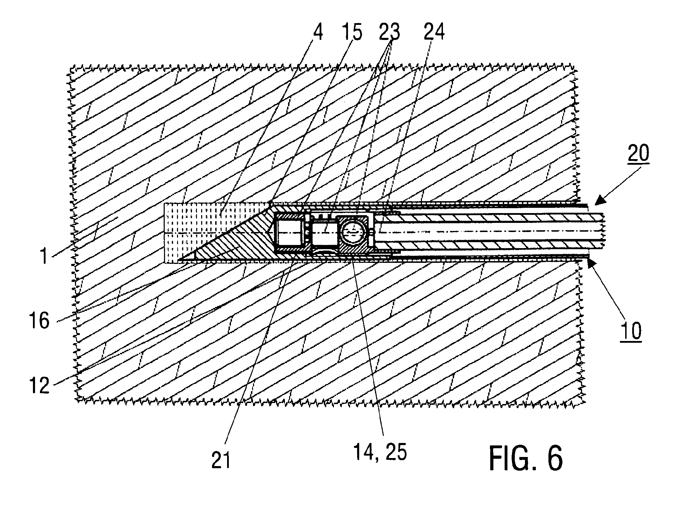

Anschließend wird die Sensoreinrichtung 20 in die Verankerungseinrichtung 10 eingeschraubt, wie es in Figur 6 illustriert ist. Das Sensorteil 21 mit den Sensoren 23 wird mit dem Trägerteil 24 bis zur Aufnahme 12 vorgeschoben und durch Verschrauben der Innen- und Außengewinde 14, 25 form- und/oder kraftschlüssig mit der Verankerungseinrichtung 10 gekoppelt.

Die in der vorstehenden Beschreibung, den Zeichnungen und den Ansprüchen offenbarten Merkmale der Erfindung können sowohl einzeln als auch in Kombination für die Verwirklichung der Erfindung in ihren verschiedenen Ausgestaltungen von Bedeutung sein.

## Patentansprüche

1. Verankerungseinrichtung (10) für eine Sensoreinrichtung (20), die zur Erfassung von seismischen Signalen in einer geologischen Struktur oder einem Bauwerk eingerichtet ist, umfassend:
- ein Verankerungsrohr (11), das eine Aufnahme (12) für die Sensoreinrichtung (20) und eine Kopplungseinrichtung (13) zur Verbindung der Sensoreinrichtung (20) mit dem Verankerungsrohr (11) aufweist,
**dadurch gekennzeichnet, dass**
- die Kopplungseinrichtung (13) einen Rohr-Gewindebereich (14) umfasst, der sich in der Aufnahme (12) im Verankerungsrohr (11) erstreckt.

2. Verankerungseinrichtung nach Anspruch 1, bei der die Aufnahme (12) an einem Rohrende (15) des Verankerungsrohrs (11) vorgesehen ist.

3. Verankerungseinrichtung nach Anspruch 2, bei der das Rohrende (15) geschlossen ist.

4. Verankerungseinrichtung nach mindestens einem der vorhergehenden Ansprüche, bei der das Rohrende (15) ein Spitzenelement (16) aufweist.

5. Verankerungseinrichtung nach Anspruch 4, bei der das Spitzenelement (16) schiefwinkelig ist.

6. Verankerungseinrichtung nach Anspruch 4 oder 5, bei der das Spitzenelement (16) und das Verankerungsrohr (11) verdrehsicher miteinander verbunden sind.

7. Verankerungseinrichtung nach mindestens einem der vorhergehenden Ansprüche, bei der das Verankerungsrohr (11) an einem zur Aufnahme (12) entgegengesetzten Ende ein Eingriffselement (17) zum Ansetzen eines Werkzeugs aufweist.

8. Verankerungseinrichtung nach mindestens einem der vorhergehenden Ansprüche, bei der das Verankerungsrohr (11) an einem zur Aufnahme (12) entgegengesetzten Ende ein Gewinde zum Ansetzen einer Ankermutter aufweist.

9. Verankerungseinrichtung nach mindestens einem der vorhergehenden Ansprüche, bei welcher der Rohr-Gewindebereich (14) ein gefrästes Innengewinde in der Aufnahme (12) umfasst.

10. Sensoreinrichtung (20) zur Erfassung von seismischen Signalen, umfassend:
- ein Sensorteil (21) mit einem Gehäuse (22), in dem mindestens ein seismischer Sensor (23) angeordnet ist, und
- ein stabförmiges Trägerteil (24), an dem das Sensorteil (21) angebracht ist,
**dadurch gekennzeichnet, dass**
- auf einer Außenseite des Gehäuses (22) ein Sensor-Gewindebereich (25) zur Verbindung der Sensoreinrichtung (20) mit einer Verankerungseinrichtung (10) vorgesehen ist.

11. Sensoreinrichtung nach Anspruch 10, bei der das Sensorteil (21) an einem ersten Ende (26) des Trägerteils (24) angeordnet ist.

12. Sensoreinrichtung nach Anspruch 11, bei der das Sensorteil (21) am ersten Ende (26) des Trägerteils (24) lösbar befestigt ist.

13. Sensoreinrichtung nach mindestens einem der Ansprüche 10 bis 12, bei der das Trägerteil (24) elektrische Verbindungen aufweist, die vom Sensorteil (21) am ersten Ende (26) zu einem zweiten Ende (27) des Trägerteils (24) führen.

14. Sensoreinrichtung nach Anspruch 13, bei der das Trägerteil (24) aus einem Faserverbundmaterial besteht, in das die elektrischen Verbindungen integriert sind.

15. Sensoreinrichtung nach mindestens einem der Ansprüche 10 bis 14, bei der das Sensorteil (21) mindestens drei Sensoren (23) enthält.

16. Seismisches Messgerät (30), das umfasst:
- eine Verankerungseinrichtung (10) nach mindestens einem der Ansprüche 1 bis 9, und
- eine Sensoreinrichtung (20) nach mindestens einem der Ansprüche 10 bis 15.

17. Verfahren zur seismischen Messung in einer geologischen Struktur oder einem Bauwerk, mit den Schritten:
- Einbringung der Verankerungseinrichtung (10) nach mindestens einem der Ansprüche 1 bis 9 in die geologische Struktur oder das Bauwerk,
- Fixierung der Verankerungseinrichtung in der geologischen Struktur oder dem Bauwerk, und
- Erfassung seismischer Schwingungen mit der Sensoreinrichtung (20) nach mindestens einem der Ansprüche 10 bis 15.

18. Verfahren nach Anspruch 17, bei dem die Sensoreinrichtung (20) in der Verankerungseinrichtung (10) eingeschraubt ist, während der Verankerungseinrichtung (10) in die geologische Struktur oder das Bauwerk eingebracht wird oder nach der Fixierung der Verankerungseinrichtung in die Verankerungseinrichtung (10) eingeschraubt wird.
